# EUROPÄISCHE PATENTSCHRIFT

(11) **EP 4 352 374 B1**
(45) Veröffentlichungstag und Bekanntmachung des Hinweises auf die Patenterteilung: **28.01.2026**
(21) Anmeldenummer: 22731122.2
(22) Anmeldetag: 23.05.2022
(51) Int. Cl.: F16D 1/10, F16D 1/116, H02K 7/116, F16H 1/16, F16B 21/18, F16C 19/06

(54) **ANORDNUNG MIT EINER WELLE, EINEM AUF DIE WELLE AUFGESTECKTEN INNENRING EINES LAGERS UND EINER MIT DER WELLE VERBUNDENEN NABE**
ARRANGEMENT WITH A SHAFT, AN INNER RING OF A BEARING MOUNTED ON THE SHAFT AND A HUB CONNECTED TO THE SHAFT
ENSEMBLE AVEC UN ARBRE, UNE BAGUE INTÉRIEURE D'UN PALIER MONTÉE SUR L'ARBRE ET UN MOYEU ATTACHÉ À L'ARBRE

(30) Priorität: 07.06.2021 DE 102021002889
(43) Veröffentlichungstag der Anmeldung: 17.04.2024
(73) Patentinhaber: SEW-EURODRIVE GmbH & Co. KG, 76646 Bruchsal (DE)
(72) Erfinder: TEGELTIJA, Miki, 76689 Karlsdorf-Neuthardt (DE)
(86) Internationale Anmeldenummer: PCT/EP2022/063940
(87) Internationale Veröffentlichungsnummer: WO 2022/258358

(56) Entgegenhaltungen:
- DE-A1- 102008 042 281
- DE-A1- 102009 020 981
- DE-A1- 102009 046 761
- DE-A1- 102010 026 963
- DE-A1- 102011 079 274
- DE-A1- 102016 000 014
- DE-A1- 2 215 041
- JP-A- 2002 276 681
- US-A1- 2013 223 781

## Beschreibung

Die Erfindung betrifft eine Anordnung zur Verbindung und einen Getriebemotor.

**Aus der** US 8 784 220 B1 **ist als nächstliegender Stand der Technik eine Welle-Nabe-Verbindung bekannt.**

**Aus der** DE 198 12 862 A1 **ist eine Dichtung für ein Wellenlager bekannt.**

**Aus der** DE 10 2014 223 513 A1 **ist ein Gebermittel bekannt.**

**Aus der** DE 17 15 889 U **ist ein Elektro-Separator bekannt.**

**Aus der** US 2013 223 781 A1 **ist als nächstliegender Stand der Technik eine Anordnung mit einer Welle, einem Innenring eines Lagers und einer drehfest mit der Welle verbundenen Nabe bekannt.**

**Aus der** DE 10 2011 079 274 A1 **ist ein Lenkritzel für ein Lenksystem bekannt.**

**Aus der** DE 10 2016 000 014 A1 **ist eine Kraftfahrzeug-Reduziereinrichtung bekannt.**

**Aus der** DE 2 215 041 A **ist ein Sicherungs- und Dichtelement bekannt.**

**Aus der** DE 10 2009 020 981 A1 **ist eine Verbindungsanordnung einer Getriebewelle mit einem Gelenk bekannt.**

**Aus der** JP 2002276681 **ist eine Steckkupplung bekannt.**

**Aus der** DE 10 2009 046 761 A1 **ist eine Kupplung bekannt.**

**Aus der** DE 10 2008 042 281 A1 **ist eine Wellenlagerung bekannt.**

**Aus der** DE 10 2010 026 963 A1 **ist eine Kupplungsanordnung bekannt.**

Allgemein bekannt sind außerdem Sicherungsringe, die jedoch bei der Aufbringung auf eine Welle elastisch gedehnt und gut geführt werden müssen.

Der Erfindung liegt daher die Aufgabe zugrunde, einen Getriebemotor mit möglichst wenig Aufwand fertigbar zu machen.

Erfindungsgemäß wird die Aufgabe bei der Anordunung zur Verbindung nach den in Anspruch 1 und bei dem Getriebemotor nach den in Anspruch 12 angegebenen Merkmalen gelöst.

Wichtige Merkmale der Erfindung bei der Anordnung zur Verbindung, insbesondere Anordnung mit einer Welle und einer mit der Welle verbundenen Nabe, sind, dass ein Innenring eines Lagers auf die Welle aufgesteckt ist und gegen eine Wellenstufe angestellt ist,
wobei die Welle mit der Nabe drehfest verbunden ist,
wobei eine Kappe auf die Welle aufgesteckt ist,
wobei die Kappe zwischen der Welle und der Nabe angeordnet ist,
wobei die Kappe einen nach radial innen hervorragenden Innenkragen aufweist, welcher in eine Ringnut der Welle hineinragt, insbesondere zur axialen Sicherung und/oder Begrenzung der Kappe,
wobei der Innenring des Lagers gegen die Kappe angestellt ist.

Von Vorteil ist dabei, dass der Innenring axial begrenzt ist durch die Stufe der Welle zusammen mit der Kappe. Dabei ist wichtig, dass die Montage nur ein Aufstecken des Lagers und dann der Kappe erfordert. Dies ist einfach mit einem Roboter ausführbar, insbesondere im Unterschied zum Aufstecken eines Sicherungsrings anstatt der Kappe. Denn wenn ein Sicherungsring aufgesteckt wird, ist nicht nur eine Bewegung in axialer Richtung, sondern auch ein Aufdehnen des Sicherungsrings mit einem Werkzeug notwendig. Hingegen genügt bei der Erfindung eine bloße axiale Bewegung des Roboters und das elastische Aufdehnen der Kappe erfolgt während der Bewegung automatisch. Die Kappe klippst dann in die Ringnut ein und hat den weiteren Vorteil, dass sie nicht nur die axiale Sicherung des Innenrings des Lagers, sondern auch die Bedämpfung der der Welle-Nabe-Verbindung bewirkt. Denn die Kappe verhindert die direkte Berührung der Welle mit der Nabe. Allerdings wird das gesamte Drehmoment durch die Kappe durchgleitet. Dabei werden durch die spielfreie Verbindung der zwischengeordneten Kappe Geräuschemissionen auch bei Drehzahlschwankungen vermindert.

Erfindungsgemäß ragt an dem der Nabe zugewandten axialen Endbereich der Welle ein Federbereich, insbesondere ein sich radial erstreckender Federbereich, an der Welle ausgebildet ist und in axialer Richtung hervor,
wobei, zur drehfesten Feder-Nut-Verbindung, der Federbereich in eine Nut, in eine sich in radialer Richtung erstreckende Nut, der Nabe zumindest teilweise hineinragt, insbesondere so dass eine in Umfangsrichtung formschlüssige Verbindung bewirkt ist, insbesondere so, dass also Welle und Nabe drehfest verbunden sind. Von Vorteil ist dabei, dass ein hohes Drehmoment sicher durchleitbar ist von der Welle auf die Nabe. Denn die Nabe ist mittels des in die Nut der Nabe hineinragenden Federbereichs der Welle in Umfangsrichtung formschlüssig und mittels der zwischengeordneten Kappe sogar spielfrei formschlüssig verbunden, insbesondere also spielfrei drehfest verbunden.

Bei einer vorteilhaften Ausgestaltung ist die axiale Richtung parallel zur Richtung der Drehachse ausgerichtet,
insbesondere wobei die Umfangsrichtung und die radiale Richtung jeweils auf die Drehachse der Welle bezogen sind. Von Vorteil ist dabei, dass die hier genannten Richtungen, also die radiale, axiale Richtung sowie die Umfangsrichtung auf die Drehachse der Welle bezogen sind.

Erfindungsgemäß weist die Kappe einen nach radial außen hervorragenden Außenkragen auf, gegen welchen der Innenring des Lagers angestellt ist. Von Vorteil ist dabei, dass eine weiter vergrößerte Anlagefläche an der Kappe für den Innenring des Lagers bereitstellbar ist.

Bei einer vorteilhaften Ausgestaltung ist die Wandstärke der Kappe konstant, insbesondere also die Kappe überall dieselbe Wandstärke aufweist, insbesondere in jeweiliger Normalenrichtung zur Oberfläche. Von Vorteil ist dabei, dass die Form der Kappe der Form der Welle samt deren Federbereich folgt und angepasst ist.

Bei einer vorteilhaften Ausgestaltung ist mittels der Kappe die Verbindung zwischen Welle und Nabe in Umfangsrichtung spielfrei, insbesondere also spielfrei drehfest ist. Von Vorteil ist dabei, dass die Kappe aus einem elastischeren Material als die Welle und die Nabe ausgeführt ist. Somit ist die Kappe auf die welle aufschiebbar und dabei aufdehnbar, so dass die Kappe nicht nur formschlüssig durch Einrasten des Innenkragens in die Ringnut der Welle, sondern auch kraftschlüssig aufgepresst gehalten ist durch die elastisch auf den Umfang der Welle aufgespannte Kappe. Die Kappe ist also auch nach dem Einrasten des Innenkragens in die Ringnut der Welle nicht völlig entspannt.

Bei einer vorteilhaften Ausgestaltung ist die Welle auf der von der Kappe in axialer Richtung abgewandten Seite des Lagers eine Verzahnung aufweist, insbesondere wobei die Welle als Ritzelwelle ausgebildet. Von Vorteil ist dabei, dass das durchgeleitete Drehmoment an ein drehbar gelagertes Verzahnungsteil, welches mit der Verzahnung im Eingriff ist weiterleitbar ist.

Bei einer vorteilhaften Ausgestaltung weist die Nabe eine durchgehende Axialbohrung auf, welche in die Nut mündet. Von Vorteil ist dabei, dass beim Einstecken einer Rotorwelle in die Axialbohrung kein Luftdruck dem Einstecken entgegenwirkt.

Erfindungsgemäß ist in dem von dem Federbereich in axialer Richtung überdeckten Bereich der maximale Radialabstand zur Drehachse der Welle kleiner als der maximale Radialabstand in demjenigen Bereich, welcher in axialer Richtung von der Kappe überdeckt ist.

Bei einer vorteilhaften Ausgestaltung weist die Kappe in Umfangsrichtung voneinander beabstandete, insbesondere nicht durchgehende, Axialschlitze auf. Von Vorteil ist dabei, dass die Kappe eine hohe Elastizität aufweist.

Bei einer vorteilhaften Ausgestaltung sind die Axialschlitze an dem von der Nabe abgewandten axialen Endbereich der Kappe angeordnet. Von Vorteil ist dabei, dass beim Einstecken der Welle in die Kappe der den Innenkragen enthaltende Beriech zuerst aufgeweitet wird. Insbesondere ist der Innenkragen in Umfangsrichtung mehrfach unterbrochen ausgeführt, die Ringnut der Welle jedoch nicht.

Bei einer vorteilhaften Ausgestaltung sind die Welle und die Nabe aus Stahl gefertigt. Von Vorteil ist dabei, dass ein hohes Drehmoment durchleitbar ist.

Bei einer vorteilhaften Ausgestaltung ist die Kappe aus Kunststoff gefertigt. Von Vorteil ist dabei, dass eine effiziente Bedämpfung von Drehmomentwelligkeiten
Bei einer vorteilhaften Ausgestaltung fungiert die Nabe als Kupplungsteil. Von Vorteil ist dabei, dass eine Welle mit der Nabe verbindbar ist und somit eine Kupplungsfunktion durch die Nabe ausführbar ist.

Bei einer vorteilhaften Ausgestaltung ist der Federbereich quaderförmig ausgeformt, wobei die radial äußeren Seitenflächen abgerundet ausgeführt sind. Von Vorteil ist dabei, dass eine einfache Herstellung und eine maximale Ausnutzung des zur Verfügung stehenden Bauraums ausgenutzt werden.

Bei einer vorteilhaften Ausgestaltung weist der Federbereich eine axial gerichtete, zur Drehachse der Welle koaxial ausgeführte Sacklochbohrung auf. Von Vorteil ist dabei, dass ein niedriges Massenträgheitsmoment der Welle bei hohem Wert des durchgeleiteten Drehmoments erreichbar ist.

Bei einer vorteilhaften Ausgestaltung ist der Federbereich in einer Vertiefung der Kappe aufgenommen und/oder die Kappe ist der Oberflächenkontur der Welle mit ihrem Federbereich folgend entsprechend geformt, insbesondere so dass der maximale Abstand der Kappe gemessen in Normalenrichtung zur Oberfläche der Welle stets weniger als das Doppelte der Wandstärke der Kappe beträgt. Von Vorteil ist dabei, dass die Kappe zwischen Nabe und Welle einquetschbar ist. Somit ist eine spielarme Durchleitung des Drehmoments ermöglicht und daher auch ein schallemissionsarmer Betrieb.

Wichtige Merkmale bei dem Getriebemotor mit einer Welle-Nabe-Verbindung sind, dass eine Rotorwelle eines Elektromotors des Getriebemotors in die Zentralbohrung der Nabe eingesteckt, insbesondere eingepresst, und verbunden, insbesondere kraftschlüssig verbunden, ist,
wobei die Welle eintreibende Welle eines Getriebes des Elektromotors ist.

Von Vorteil ist dabei, dass eine Montage von einem Roboter einfach ausführbar ist. Denn die Teile, wie Innenring und Kappe, müssen nur nacheinander auf die Welle aufgesteckt werden, wobei ein einfaches Aufnehmen des jeweiligen Teils durch den Roboter ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist als erstes Ausführungsbeispiel ein Längsschnitt durch eine erfindungsgemäße Welle-Nabe-Verbindung mit einer Kappe 3 und mit einem Lager 2 dargestellt.
In der Figur 2 ist die Welle-Nabe-Verbindung in Schrägansicht dargestellt.
In der Figur 3 ist die Welle-Nabe-Verbindung in Schrägansicht explodiert dargestellt.
In der Figur 4 ist die Kappe 3 in Schrägansicht aus einer ersten Blickrichtung dargestellt.
In der Figur 5 ist die Kappe 3 in Schrägansicht aus einer zweiten Blickrichtung dargestellt.

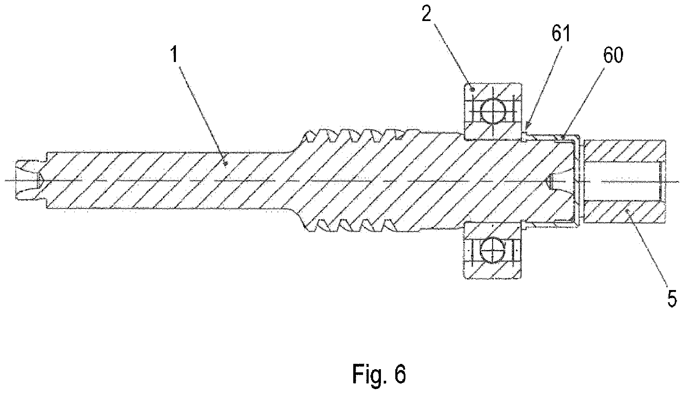

In der Figur 6 ist als zweites Ausführungsbeispiel die Welle-Nabe-Verbindung im Unterschied zur Figur 1 mit einer anderen Kappe 60 ausgebildet.

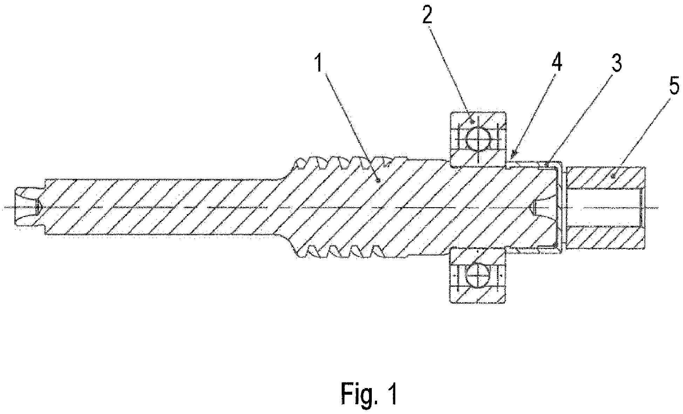

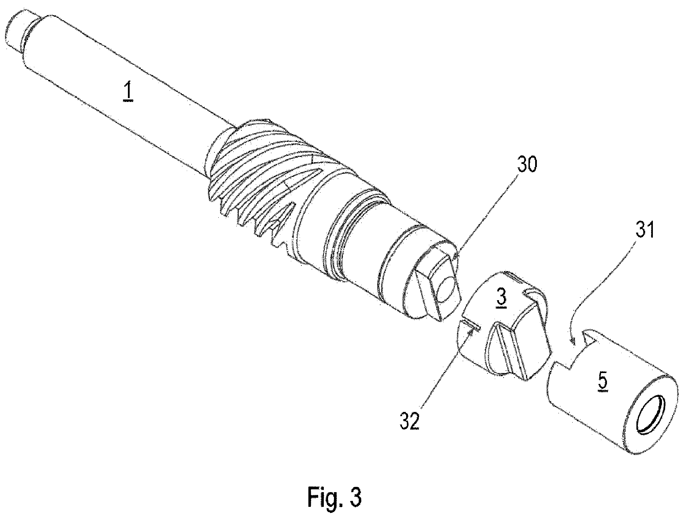

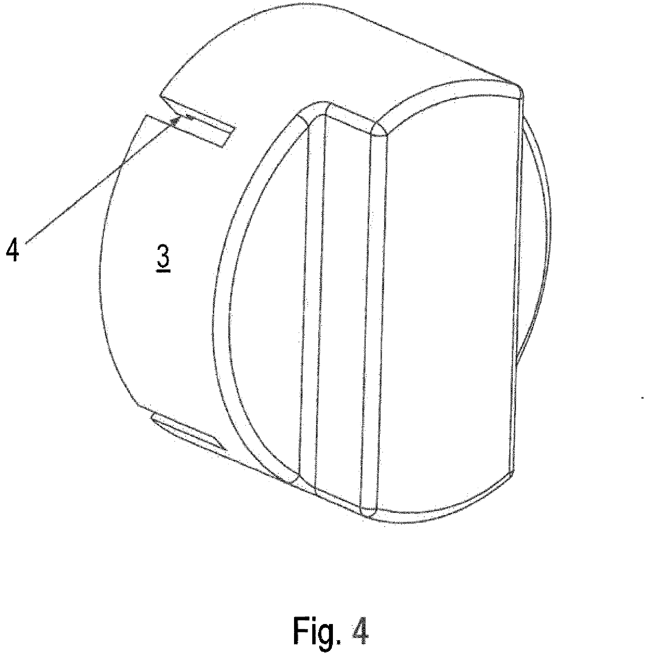

Wie in den Figuren 1 bis 5 gezeigt, ist bei dem ersten Ausführungsbeispiel auf den axialen Endbereich einer Welle 1 eine Kappe 3 aufgeschoben, so dass eine axial hervorragender, insbesondere quaderförmig ausgeführter, Federbereich der Welle 1 mit der zwischengeordneten Kappe 3 in eine Nut 31 der Nabe 5 hineinragt.

Auf diese Weise ist eine in Umfangsrichtung formschlüssige, spielfreie und drehfeste Verbindung zwischen der Welle 1 und der Nabe 5 erreicht. Auch bei Drehmomentschwankungen ist Geräuschemission verhindert. Denn die Kappe 3 ist aus einem Kunststoff gefertigt.

Vorzugsweise sind die Nabe 5 sowie die Welle 1 aus Stahl gefertigt.

Der Innenring des Lagers 2 ist auf die Welle 1 aufgesteckt und gegen eine Stufe der Welle 1 angestellt.

Die Kappe 3 weist einen nach radial innen hervorragenden Innenkragen 4 auf, der in eine Ringnut der Welle 1 hineinragt.

Insbesondere ist die Ringachse der Ringnut parallel zur Drehachse der Welle 1 und gleicht dieser.

Die Ringnut ist in Umfangsrichtung vollständig umlaufend ausgeführt.

Die Kappe 3 ist auf den Endbereich der Welle 1 aufgesteckt und bedeckt dabei auch einen radial sich erstreckenden Federbereich 30, der axial an der Stirnseite der Welle 1 hervorragt. Beim Aufstecken dehnt sich der aufgesteckte Bereich der Kappe 3 zunächst radial aus, wobei zur Erhöhung der Elastizität Axialschlitze an der Kappe 3 vorgesehen sind. Sobald der Innenkragen 4 die Ringnut der Welle 1 erreicht, schnappt er in diese ein.

Somit ist die Kappe 3 kraftschlüssig und formschlüssig mit der Welle 1 verbunden. Der Formschluss ist dabei in axialer Richtung durch den in die Ringnut eingeklipsten Innenkragen bewirkt und in Umfangsrichtung durch den Federbereich 30, an dem die Kappe 3 anliegt, insbesondere an allen Seiten des Federbereichs 30.

Die Kappe 3 weist dazu eine Vertiefung auf, die dem Federbereich 30 entsprechend geformt ist, so dass die Kappe in dem an der Welle 1 von der Kappe 3 bedeckten Oberflächenbereich überall einen maximalen Abstand in jeweiliger Normalenrichtung aufweist, der kleiner ist als ein Schwellwert. Somit ist die Kappe 3 vorzugsweise mit einer überall konstanten Wandstärke ausgeführt.

Die Kappe 3 ist somit einerseits durch elastische Verformung und andererseits durch Formschluss drehfest mit der Welle 1 verbunden.

Auf der von der Stufe der Welle 1 in axialer Richtung abgewandten Seite des Innenrings des Lagers 2 liegt der Innenring des Lagers 2 an dem Innenkragen 4 der Kappe 3 an.

Somit begrenzt die Kappe 3 den Innenring des Lagers 2.

Die Axialschlitze 32 sind in Umfangsrichtung voneinander beabstandet, insbesondere voneinander gleichmäßig beabstandet. In axialer Richtung erstrecken sich die Axialschlitze 32 vom der Stufe zugewandten Rand der Kappe 3 um weniger als 60 % der axialen maximalen Länge der Kappe 3.

Die Nabe 5 ist vorzugsweise als Kupplungsteil ausgeführt und weist eine axial durchgehende Zentralbohrung auf, in welche eine Rotorwelle eines Elektromotors einsteckbar ist. Vorzugsweise mündet die Zentralbohrung in die stirnseitige Nut 31 der Nabe 5, in welche der von der Kappe 3 bedeckte Federbereich 30 hineinragt. Von Vorteil ist dabei, dass beim Einpressen der Rotorwelle in die Zentralbohrung die verdrängte Luft durch die Nut 31 entweichen kann.

Die Welle 1 weist vorzugsweise eine Verzahnung auf und ist somit als eine eintreibende Welle eines Getriebes verwendet, welches von dem Elektromotor angetrieben wird. Die Verzahnung steht dabei im Eingriff mit einem Verzahnungsteil, das drehfest mit einer im Getriebe drehbar gelagerten Zwischenwelle verbunden ist.

Vorzugsweise weist die Welle 1 in dem von der Kappe 3 abgedeckten Bereich eine Rücknahme auf, so dass die Welle 1 in dem in axialer Richtung von den Axialschlitzen 32 überdeckten Bereich einen größeren Außendurchmesser aufweist als in einem von der Kappe 3 abgedeckten Bereich, der in axialer Richtung von den Axialschlitzen 32 beabstandet ist und/oder der den in axialer Richtung vom Federbereich 30 überdeckten Bereich umfasst.

Zwar weist die Kappe 3 Axialschlitze 32 auf und eine Vertiefung zur Aufnahme des Federbereichs 32, wobei die Kappe 3 eine in die Nut 31 hineinragende Erhöhung aufweist. Dabei ist die Wandstärke der Kappe 3 vorzugsweise überall gleich groß.

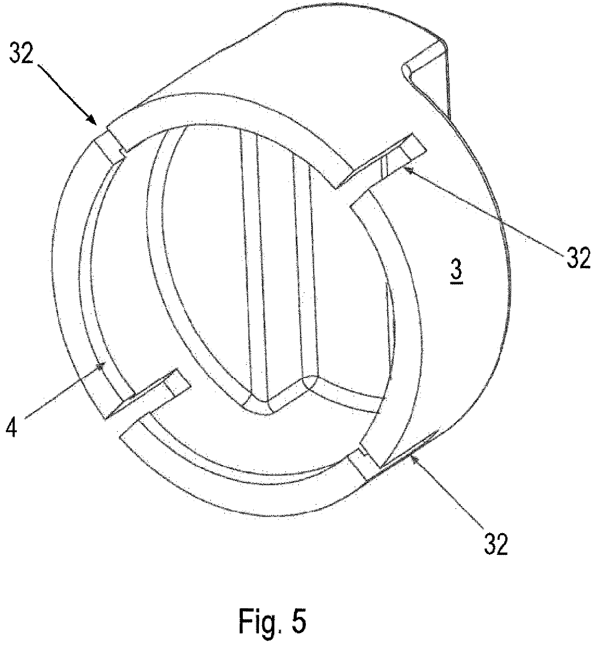

Wie in Figur 5 dargestellt, ist bei diesem zweiten Ausführungsbeispiel der nach radial innen hervorragende Innenkragen 4 ersetzt durch einen Kragen 61, der zwar einerseits einen nach radial innen hervorragenden Innenkragen und andererseits einen nach radial außen hervorragenden Außenkragen umfasst.

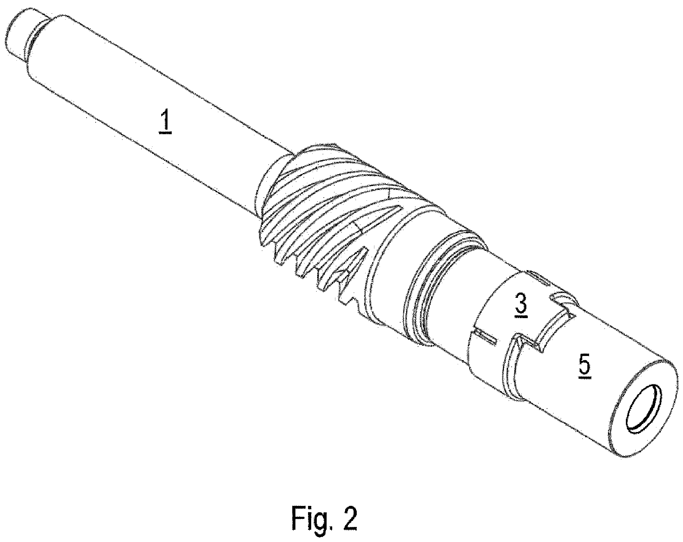

Somit liegt bei diesem Ausführungsbeispiel nach Figur 2 der Innenring des Lagers 2 nicht nur am Innenkragen an, sondern am ganzen Kragen 61, also auch am Außenkragen.

Bei weiteren erfindungsgemäßen Ausführungsbeispielen wird ist die Nabe 5 als Hohlwelle oder Vollwelle ausgebildet. Die Welle 1 ist optional auch ohne Verzahnung ausführbar.

### Bezugszeichenliste

1 eintreibende Welle
2 Lager
3 Kappe
4 Innenkragen
5 Nabe, insbesondere Kupplungsteil
30 Federbereich
31 Nut
32 Axialschlitz
60 Kappe
61 Kragen, insbesondere Außenkragen und Innenkragen

## Patentansprüche

1. **Anordnung mit einer Welle (1), einem Innenring eines Lagers (2) und einer mit der Welle (1) verbundenen Nabe (5), die zur Verbindung mit einer weiteren Welle (1), insbesondere Rotorwelle, dient,**
wobei **der** Innenring des Lagers (2) auf die Welle (1) aufgesteckt ist und gegen eine Wellenstufe angestellt ist,
wobei die Welle (1) mit der Nabe (5) drehfest verbunden ist,
**dadurch gekennzeichnet, dass**
eine Kappe (3) auf die Welle (1) **an einem axialen Endbereich der Welle (1) diesen bedeckend** aufgesteckt ist,
wobei die Kappe (3) **in axialer Richtung betrachtet** zwischen der Welle (1) und der Nabe (5) angeordnet ist,
wobei die Kappe (3) einen nach radial innen hervorragenden Innenkragen (4) aufweist,
welcher in eine Ringnut der Welle (1) hineinragt, insbesondere zur axialen Sicherung und/oder Begrenzung der Kappe (3),
wobei der Innenring des Lagers (2) gegen die Kappe (3) angestellt ist,
**wobei an dem der Nabe (5) zugewandten axialen Endbereich der Welle (1) ein sich radial erstreckender Federbereich (30) an der Welle (1) ausgebildet ist und in axialer Richtung hervorragt,**
**wobei, insbesondere zur drehfesten Feder-Nut-Verbindung, der Federbereich (30) in eine sich in radialer Richtung erstreckende Nut der Nabe (5) zumindest teilweise hineinragt,**
**wobei in dem von dem Federbereich (30) in axialer Richtung überdeckten Bereich der maximale Radialabstand zur Drehachse der Welle (1) kleiner ist als der maximale Radialabstand in demjenigen Bereich, welcher in axialer Richtung von der Kappe (3) überdeckt ist,**
**wobei die Kappe (3) einen nach radial außen hervorragenden Außenkragen aufweist, gegen welchen der Innenring des Lagers (2) angestellt ist.**

2. Anordung nach Anspruch 1,
**dadurch gekennzeichnet, dass**
**eine in Umfangsrichtung formschlüssige Verbindung bewirkt ist**
**und/oder dass**
**Welle (1) und Nabe (5) drehfest verbunden sind.**

3. Anordung nach einem der vorangegangenen Ansprüche,
**dadurch gekennzeichnet, dass**
die Wandstärke der Kappe (3) konstant ist, insbesondere also die Kappe (3) überall dieselbe Wandstärke aufweist, insbesondere in jeweiliger Normalenrichtung zur Oberfläche.

4. Anordung nach einem der vorangegangenen Ansprüche,
**dadurch gekennzeichnet, dass**
mittels der Kappe (3) die Verbindung zwischen Welle (1) und Nabe (5) in Umfangsrichtung spielfrei ist, insbesondere also spielfrei drehfest ist.

5. Anordung nach einem der vorangegangenen Ansprüche,
**dadurch gekennzeichnet, dass**
die Welle (1) auf der von der Kappe (3) in axialer Richtung abgewandten Seite des Lagers (2) eine Verzahnung aufweist, insbesondere wobei die Welle (1) als Ritzelwelle ausgebildet ist.

6. Anordung nach einem der vorangegangenen Ansprüche,
**dadurch gekennzeichnet, dass**
die Nabe (5) ein durchgehende Axialbohrung aufweist, welche in die Nut (31) mündet.

7. Anordung nach einem der vorangegangenen Ansprüche,
**dadurch gekennzeichnet, dass**
in dem von dem Federbereich (30) in axialer Richtung überdeckten Bereich der maximale Radialabstand zur Drehachse der Welle (1) kleiner ist als der maximale Radialabstand in demjenigen Bereich, welcher in axialer Richtung von der Kappe (3) überdeckt ist.

8. Anordung nach einem der vorangegangenen Ansprüche,
**dadurch gekennzeichnet, dass**
die Kappe (3) in Umfangsrichtung voneinander beabstandete, insbesondere nicht durchgehende, Axialschlitze (32) aufweist,
**insbesondere wobei**
die Axialschlitze (32) an dem von der Nabe (5) abgewandten axialen Endbereich der Kappe (3) angeordnet sind.

9. Anordung nach einem der vorangegangenen Ansprüche,
**dadurch gekennzeichnet, dass**
die Welle (1) und die Nabe (5) aus Stahl gefertigt sind
und/oder dass die Kappe (3) aus Kunststoff gefertigt ist.

10. Anordung ee nach einem der vorangegangenen Ansprüche,
**dadurch gekennzeichnet, dass**
die Nabe (5) als Kupplungsteil fungiert.

11. Anordung nach einem der vorangegangenen Ansprüche,
**dadurch gekennzeichnet, dass**
der Federbereich (30) quaderförmig ausgeformt ist, wobei die radial äußeren Seitenflächen abgerundet ausgeführt sind,
und/oder dass
der Federbereich (30) eine axial gerichtete, zur Drehachse der Welle (1) koaxial ausgeführte Sacklochbohrung aufweist,
und/oder dass
der Federbereich (30) in einer Vertiefung der Kappe (3) aufgenommen ist und/oder die Kappe (3) der Oberflächenkontur der Welle (1) mit ihrem Federbereich (30) folgend entsprechend geformt ist, insbesondere so dass der maximale Abstand der Kappe (3) gemessen in Normalenrichtung zur Oberfläche der Welle (1) stets weniger als das Doppelte der Wandstärke der Kappe (3) beträgt.

12. Getriebemotor mit Anordung nach einem der vorangegangenen Ansprüche,
**dadurch gekennzeichnet, dass**
eine Rotorwelle eines Elektromotors des Getriebemotors in die Zentralbohrung der Nabe (5) eingesteckt, insbesondere eingepresst, und verbunden, insbesondere kraftschlüssig verbunden, ist,
wobei die Welle (1) eintreibende Welle (1) eines Getriebes des Elektromotors ist.

## Claims

1. An arrangement having a shaft (1), an inner race of a bearing (2) and a hub (5) connected to the shaft (1), which arrangement serves to connect to a further shaft (1), in particular a rotor shaft,
wherein the inner race of the bearing (2) is mounted onto the shaft (1) and is placed against a shaft step,
wherein the shaft (1) is connected to the hub (5) in a rotationally-fixed manner, **characterised in that**
a cap (3) is mounted onto the shaft (1) at an axial end-region of the shaft (1) in a manner covering this end-region,
wherein the cap (3) is arranged between the shaft (1) and the hub (5) viewed in an axial direction,
wherein the cap (3) has a radially inwards projecting inner collar (4) which projects into an annular groove of the shaft (1), in particular to axially secure and/or bound the cap (3),
wherein the inner race of the bearing (2) is placed against the cap (3),
wherein at the axial end-region, facing the hub (5), of the shaft (1), a radially extending spring region (30) is formed at the shaft (1) and projects in an axial direction,
wherein, in particular for the rotationally-fixed tongue and groove connection, the spring region (30) at least partially projects into a groove, extending in a radial direction, of the hub (5),
wherein in the region covered in an axial direction by the spring region (30), the maximum radial distance from the rotational axis of the shaft (1) is smaller than the maximum radial distance **in that** region which is covered in an axial direction by the cap (3),
wherein the cap (3) has a radially outwards projecting outer collar against which the inner race of the bearing (2) is placed.

2. An arrangement according to claim 1,
**characterised in that**
there is effected a connection which is form-locked in a circumferential direction,
and/or **in that**
shaft (1) and hub (5) are connected in a rotationally-fixed manner.

3. An arrangement according to any one of the preceding claims,
**characterised in that**
the wall thickness of the cap (3) is constant, in particular therefore the cap (3) has the same wall thickness everywhere, in particular in a respective normal direction to the surface.

4. An arrangement according to any one of the preceding claims,
**characterised in that**
the connection between shaft (1) and hub (5) is play-free in a circumferential direction by means of the cap (3), in particular therefore is rotationally-fixed in a play-free manner.

5. An arrangement according to any one of the preceding claims,
**characterised in that**
the shaft (1) has toothing at that side of the bearing (2) remote from the cap (3) in an axial direction, in particular wherein the shaft (1) is in the form of a pinion shaft.

6. An arrangement according to any one of the preceding claims,
**characterised in that**
the hub (5) has a through-passing axial bore which opens into the groove (31).

7. An arrangement according to any one of the preceding claims,
**characterised in that**
in the region covered in an axial direction by the spring region (30), the maximum radial distance from the rotational axis of the shaft (1) is smaller than the maximum radial distance **in that** region which is covered in an axial direction by the cap (3).

8. An arrangement according to any one of the preceding claims,
**characterised in that**
the cap (3) has axial slots (32) which are spaced apart from one another in a circumferential direction, in particular are not through-passing,
in particular wherein
the axial slots (32) are arranged at the axial end-region, remote from the hub (5), of the cap (3).

9. An arrangement according to any one of the preceding claims,
**characterised in that**
the shaft (1) and the hub (5) are manufactured of steel
and/or **in that** the cap (3) is manufactured of plastics material.

10. An arrangement according to any one of the preceding claims,
**characterised in that**
the hub (5) functions as a coupling part.

11. An arrangement according to any one of the preceding claims,
**characterised in that**
the spring region (30) is cuboid, wherein the radially outer lateral surfaces are rounded,
and/or **in that**
the spring region (30) has an axially-directed blind bore which is coaxial to the rotational axis of the shaft (1),
and/or **in that**
the spring region (30) is received in a depression of the cap (3) and/or the cap (3) is appropriately shaped following the surface contour of the shaft (1) with its spring region (30), in particular so that the maximum distance of the cap (3), measured in a normal direction, from the surface of the shaft (1) is always less than twice the wall thickness of the cap (3).

12. A geared motor having an arrangement according to any one of the preceding claims,
**characterised in that**
a rotor shaft of an electric motor of the geared motor is inserted into the central bore of the hub (5), in particular pressed in, and connected, in particular connected in a force-locked manner, wherein the shaft (1) is an input shaft (1) of a gear unit of the electric motor.

## Revendications

1. Ensemble comprenant un arbre (1), une bague intérieure d'un palier (2) et un moyeu (5) relié à l'arbre (1) et servant à la liaison avec un autre arbre (1), en particulier l'arbre de rotor,
la bague intérieure du palier (2) étant enfichée sur l'arbre (1) et appliquée contre un étage d'arbre,
l'arbre (1) étant relié de manière solidaire en rotation au moyeu (5),
**caractérisé en ce que**
un capuchon (3) est enfiché sur l'arbre (1) de manière à le recouvrir au niveau d'une région d'extrémité axiale de l'arbre (1),
le capuchon (3), vu dans la direction axiale, étant agencé entre l'arbre (1) et le moyeu (5),
le capuchon (3) présentant une collerette intérieure (4) qui fait saillie radialement vers l'intérieur et rentre dans une rainure annulaire de l'arbre (1), en particulier en vue d'une immobilisation et/ou d'une limitation axiale(s) du capuchon (3),
la bague intérieure du palier (2) étant appliquée contre le capuchon (3),
une région de ressort (30) qui s'étend radialement étant formée au niveau de l'arbre (1), et au niveau de la région d'extrémité axiale de l'arbre (1) qui est tournée vers le moyeu (5), et faisant saillie dans la direction axiale,
la région de ressort (30) faisant saillie au moins partiellement dans une rainure, s'étendant dans la direction radiale, du moyeu (5), en particulier en vue d'une liaison à rainure et languette solidaire en rotation,
la distance radiale maximale par rapport à l'axe de rotation de l'arbre (1) dans la région recouverte par la région de ressort (30) dans la direction axiale étant inférieure à la distance radiale maximale dans la région recouverte par le capuchon (3) dans la direction axiale,
le capuchon (3) présentant une collerette extérieure faisant saillie radialement vers l'extérieur et contre laquelle est appliquée la bague intérieure du palier (2).

2. Ensemble selon la revendication 1,
**caractérisé en ce que**
une liaison à verrouillage par complémentarité de forme dans la direction circonférentielle est créée,
et/ou **en ce que**
l'arbre (1) et le moyeu (5) sont reliés de manière solidaire en rotation.

3. Ensemble selon l'une quelconque des revendications précédentes,
**caractérisé en ce que**
l'épaisseur de paroi du capuchon (3) est constante, le capuchon (3) présentant en particulier la même épaisseur de paroi partout, en particulier dans chaque direction normale par rapport à la surface.

4. Ensemble selon l'une quelconque des revendications précédentes,
**caractérisé en ce que**
la liaison entre l'arbre (1) et le moyeu (5) est, au moyen du capuchon (3), sans jeu dans la direction circonférentielle, en particulier solidaire en rotation sans jeu.

5. Ensemble selon l'une quelconque des revendications précédentes,
**caractérisé en ce que**
l'arbre (1) présente une denture sur le côté du palier (2) qui est opposé au capuchon (3) dans la direction axiale, l'arbre (1) étant en particulier réalisé sous la forme d'un arbre à pignon.

6. Ensemble selon l'une quelconque des revendications précédentes,
**caractérisé en ce que**
le moyeu (5) présente un alésage axial continu qui débouche dans la rainure (31).

7. Ensemble selon l'une quelconque des revendications précédentes,
**caractérisé en ce que**
la distance radiale maximale par rapport à l'axe de rotation de l'arbre (1) dans la région recouverte par la région de ressort (30) dans la direction axiale est inférieure à la distance radiale maximale dans la région qui est recouverte par le capuchon (3) dans la direction axiale.

8. Ensemble selon l'une quelconque des revendications précédentes,
**caractérisé en ce que**
le capuchon (3) présente des fentes axiales (32) espacées les unes des autres, en particulier non continues, dans la direction circonférentielle,
les fentes axiales (32) étant en particulier agencées au niveau de la région d'extrémité axiale, opposée au moyeu (5), du capuchon (3).

9. Ensemble selon l'une quelconque des revendications précédentes,
**caractérisé en ce que**
l'arbre (1) et le moyeu (5) sont réalisés en acier
et/ou **en ce que** le capuchon (3) est réalisé en matière plastique.

10. Ensemble selon l'une quelconque des revendications précédentes,
**caractérisé en ce que**
le moyeu (5) sert de pièce d'accouplement.

11. Ensemble selon l'une quelconque des revendications précédentes,
**caractérisé en ce que**
la région de ressort (30) est de forme parallélépipédique, les surfaces latérales radialement extérieures étant arrondies,
et/ou **en ce que**
la région de ressort (30) présente un trou borgne orienté axialement et coaxial par rapport à l'axe de rotation de l'arbre (1),
et/ou **en ce que**
la région de ressort (30) est accueillie dans un renfoncement du capuchon (3) et/ou le capuchon (3) est formé de manière à suivre le contour de surface de l'arbre (1) avec sa région de ressort (30), en particulier de sorte que la distance maximale du capuchon (3) mesurée dans la direction normale par rapport à la surface de l'arbre (1) est toujours inférieure au double de l'épaisseur de paroi du capuchon (3).

12. Moto-réducteur comprenant un ensemble selon l'une quelconque des revendications précédentes,
**caractérisé en ce que**
un arbre de rotor d'un moteur électrique du motoréducteur est enfiché, en particulier enfoncé, dans l'alésage central du moyeu (5) et relié, en particulier relié avec verrouillage par complémentarité de force,
l'arbre (1) étant l'arbre d'entrée (1) d'un engrenage du moteur électrique.
